Europäisches Patentamt

European Patent Office

Office européen des brevets

(19)

(11) Publication number: 0 632 267 A1

## EUROPEAN PATENT APPLICATION
## published in accordance with Art. 158(3) EPC

(12)

(21) Application number: 94904003.4

(22) Date of filing: 07.01.94

(86) International application number:
PCT/JP94/00010

(87) International publication number:
WO 94/16322 (21.07.94 94/17)

(51) Int. Cl.6: G01N 30/88, C11B 11/00,
C11B 3/10, C11B 3/12

(30) Priority: 12.01.93 JP 36033/93

(43) Date of publication of application:
04.01.95 Bulletin 95/01

(84) Designated Contracting States:
BE DE FR GB IT NL

(71) Applicant: YOSHIKAWA OIL & FAT CO., LTD.
10-3, Kitakawahori-cho,
Tennoji-ku
Osaka-shi,
Osaka 543 (JP)

(72) Inventor: MYOJYO, Katsunori
Yoshikawa Oil & Fat Co., Ltd.
Kitano
Noguchi-cho
Kakogawa-shi
Hyogo 675 (JP)

Inventor: SATO, Mikinobu
Yoshikawa Oil & Fat Co., Ltd.
Kitano
Noguchi-cho
Kakogawa-shi
Hyogo 675 (JP)
Inventor: NEMOTO, Hiromitsu
Yoshikawa Oil & Fat Co., Ltd.
Kitano
Noguchi-cho
Kakogawa-shi
Hyogo 675 (JP)

(74) Representative: Hansen, Bernd, Dr.
Dipl.-Chem. et al
Hoffmann, Eitle & Partner,
Patentanwälte,
Arabellastrasse 4
D-81925 München (DE)

(54) METHOD OF MEASURING CONTENT OF POLYCYCLIC AROMATIC COMPOUND IN LANOLIN AND REMOVAL THEREOF.

(57) The invention provides a method of measuring the content of polycyclic aromatic compounds (PAH) remaining in lanolin, which comprises separating and concentrating the PAH by gel permeation chromatography using a styrene-divinylbenzene copolymer and determining the concentrated PAH by HPLC with a fluorometric detector; a method of removing the remaining PAH, which comprises measuring the PAH removal activity of active carbon by the above measuring method to thereby select the optimum adsorption condition and calculate the amount of the active carbon required for lowering the PAH content, and mixing the required amount of active carbon with lanolin to thereby effect specific adsorption of the PAH onto the active carbon; and a method of removing the PAH remaining in wool grease or lanolin by the vacuum distillation of the grease or lanolin under specified conditions either directly or after being treated with a borate and, if necessary, obtaining various lanolin derivatives from the treated wool grease or lanolin.

## TECHNICAL FIELD

This invention relates to a method for quantitating polycyclic aromatic compounds (hereinafter referred to briefly as PAH) in lanolin and a method for eliminating PAH using activated carbon as an adsorbent.

## PRIOR ART

Residues of PAH, substances suspected to be carcinogenic, are a serious health problem not only in the field of food but also in the field of cosmetics.

Several methods have been proposed for the quantitative assay of PAH. Thus, reports are available on techniques for assaying PAH to the ppb order in aqueous systems, atmospheric air, petroleum products, edible oils, cereals, fishes and meats but none of these techniques are fully satisfactory in all the parameters of accuracy, expediency and reproducibility. For that matter, there is no report on the technology of assaying PAH in lanolin which is different from ordinary lipids in chemical structure and various properties.

To achieve such a determination at the ppb level, it is essential to subject a starting material to some pretreatment or other and, so far, several methods of pretreatment such as liquid-liquid extraction, purification on a silica gel column, and purification procedures utilizing differences in molecular size, among others, have been reported (Int. J. Environ. Anal. Chem., vol. 24, No. 2, 113-131, 1986). However, these procedures are intended for application to meats, vegetable oils and mineral oils. Furthermore, the proposed cleanup by gel permeation chromatography (GPC) using a Sephadex LH20 column involves a very complex 4-step procedure consisting of saponification, liquid-liquid extraction, purification by silica gel column chromatography, and final purification of the concentrate by column chromatography using 10 g of LH20 followed by elution with isopropyl alcohol for recovery of a 38-190 ml fraction. Moreover, this procedure requires careful upstream and downstream parameter settings, for example varying the type and concentration of the solvent system for liquid-liquid extraction and conditions of aqueous wash according to each type of material, and/or using Florisil in lieu of silica gel for certain types of materials, and no expedient cleanup is possible by GPC alone. Moreover, the above GPC method using a Sephadex LH20 column accomplishes only separation of PAH and free fatty acids. Of course, a cleanup technology for the GPC determination of PAH using a styrene-divinylbenzene copolymer is not known.

Meanwhile, lanolin is a complex mixture of hydrocarbons, aliphatic higher alcohols, higher fatty acids, sterols, and esters thereof, which vary in molecular size from $C_{12}$ for aliphatic alcohols and fatty acids to $C_{64}$ for their esters. They vary in molecular configuration, too, from the straight-chain aliphatic series to the branched aliphatic, e.g. iso and ante-iso, series, not to speak of such other forms as cholesterol, trimethylsterol and their esters. Indeed, it is impossible to predict what kind of resin can be used for separating PAH from other components in such a complex mixture according to differences in molecular size.

The GPC process using a styrene-divinylbenzene copolymer is already known for the pretreatment of lanolin prior to the determination of residual agrochemicals. However, this process employs dichloromethane/hexane = 1/1 as the mobile phase and all the disclosure is the feasibility of separating such residual agrochemicals from lanolin. PAH is quite different from such residual agrochemicals in molecular configuration and size.

Regarding the removal of PAH from petroleum products, Udex process employing diethylene glycol as the extractant, the sulfolane process employing sulfolane as the extractant, Arosolvan process employing N-methyl-pyrrolidone as the extractant, and the DMSO process employing dimethyl sulfoxide (DMSO) as the solvent, all according to the principle of liquid-liquid extraction, have been proposed for the production of benzene, toluene and xylene. However, these processes are unsatisfactory in regard to the toxicity and recovery of the extraction solvents used.

For the removal of PAH contained in water, the use of a reversed phase system employing an octadecylated silica gel and the use of activated carbon are known. However, there is no reported case in which activated carbon was ever used for the removal of PAH from lipid materials, not to speak of a case in which such carbon has ever been applied to lanolin. Generally the adsorptive removal of any given fat-soluble component from among lipids in a non-hydrous system is achieved by utilizing the difference in affinity for activated carbon between the particular fat-soluble component and the other lipid components and, therefore, it is hardly conceivable to apply the aforementioned PAH-removing technology for a hydrous system to the removal of PAH contained in a lipid material.

Furthermore, in the purification of oils and fats in general, activated clay and activated carbon, among others, are sometimes employed for decolorization purposes but the use of activated carbon in such cases is never intended for elimination of PAH. If only in view of the state of the art that no one knows of the presence of PAH in lanolin or of any technology for quantitative determination thereof, adsorptive removal of PAH utilizing activated carbon is considered to be an art beyond the purview of the contemporary.

Regarding the decolorizing purification of lanolin, a brief report is available which, referring to technical lanolin, states that adsorption on a specific activated carbon was effective for decolorization. According to this report, when a hexane miscella was first neutralized, cooled to 20-25°C and subjected to adsorptive treatment, a decolorizing effect was obtained with two kinds of activated carbon from Soviet Russia but since no description is given about the degree of decolorization obtained, etc., details are not known. Of course, concerning lanolin materials other than genuine lanolin, the use of activated carbon for decolorization or, for that matter, any other purification purpose is certainly not known.

It is an object of this invention to provide a novel technique for quantitating PAH in lanolin and a novel technology for removing PAH.

It is a further object of this invention to provide a method for determining the PAH-removing activity of activated carbon for use in the above-mentioned technologies for the quantitation and removal of PAH and a computation method for calculating the amount of an activated carbon that is required for decreasing the concentration of PAH.

## DISCLOSURE OF THE INVENTION

The inventors of this invention succeeded in establishing a novel assay method for quantitating PAH in lanolin, which led to the discovery of the presence of PAH, which must be removed, in lanolin, and succeeded in developing a novel technology for eliminating PAH from lanolin.

Thus, this invention provides a novel quantitation method for PAH in lanolin which comprises fractionating and concentrating PAH with respect to lanolin by styrene-divinylbenzene copolymer GPC, subjecting the lanolin thus cleaned up to high performance liquid chromatography (HPLC) employing an octadecylated silica gel as the stationary phase to fractionate the PAH into its constituents and assaying them using a fluorescence detector with high sensitivity.

This quantitation method is now described in detail. The resin which can be used for a cleanup of PAH in accordance with this invention is a styrene-divinylbenzene copolymer having a certain cutoff molecular weight, in benzene, which is preferably in the range of 1000 to 3000. To be specific, BioBeads SX-2 (cutoff molecular weight = 2700), SX-3 (cutoff molecular weight = 2000), SX-4 (cutoff molecular weight = 1400) and SX-8 (cutoff molecular weight = 1000), all available from Bio-Rad Laboratories, Richmond, Calif., USA, can be mentioned by way of example.

The GPC in accordance with this invention can be carried out typically in the following manner. Thus, when a solution of the sample in dichloromethane is filtered and applied to a chromatographic column packed with a styrene-divinylbenzene copolymer (200-300 mesh, cutoff molecular weight = 2000, in benzene) and elution is carried out with dichloromethane, an ester fraction, a lanolin fatty acid-organophosphorus agrochemical-lanolin alcohol fraction, and an organochlorine agrochemical-PAH fraction emerge from the column in that order according to molecular size. Therefore, the last PAH-containing fraction is collected. This last PAH-containing fraction contains organochlorine agrochemicals. However, when this fraction is concentrated and chromatographed using an HPLC equipped with a fluorescence detector, the organochlorine agrochemicals are not detected, thus producing no interference, so that PAH alone can be specifically quantitated. The use of dichloromethane as the mobile phase is preferred because the lanolin alcohol fraction and the PAH fraction can be sharply fractionated. This GPC cleanup procedure can also be followed with the aid of a different known type of detector (e.g. UV detector) or in combination with a different fractional assay system such as a gas chromatograph (GLC) equipped with a hydrogen flame-ionization detector (FID) or the like.

Many different brands of lanolin were purchased from commercial sources and analyzed by the above quantitation method. As an example, the results of assay of PAH in wool grease (hereinafter referred to briefly as WG) are shown in Table 1.

While PAH exists in many kinds, the following six species, all of which are highly suspected to be carcinogenic, were mainly assayed. These species are fluoranthene (abbreviated as F), benzo(b)-fluoranthene (abbreviated as BbF), benzo(k)fluoranthene (abbreviated as BkF), benzo(a)pyrene (abbreviated as BaP), indeno(1,2,3-c,d)pyrene (abbreviated as IcP) and benzo(g,h,i)perylene (abbreviated as BgP).

Table 1  Results of analysis for PAH in WG

(Unit: ppb)

| Sample No. | F | BbF | BkF | BaP | IcP | BgP | Total |
|---|---|---|---|---|---|---|---|
| WG-01 | 47.3 | 67.5 | 5.3 | 2.3 | 4.0 | 2.2 | 128.6 |
| WG-02 | 50.1 | 50.0 | 7.4 | 5.7 | 10.8 | 11.9 | 135.9 |
| WG-03 | 51.0 | 65.0 | 6.6 | 5.1 | 6.1 | 3.4 | 137.2 |
| WG-04 | 55.0 | 75.7 | 5.3 | 3.0 | 4.6 | 2.4 | 146.0 |
| WG-05 | 57.5 | 81.6 | 6.1 | 2.1 | 5.2 | 1.9 | 154.4 |
| WG-06 | 65.4 | 70.0 | 7.2 | 6.9 | 9.8 | 7.1 | 166.4 |
| WG-07 | 39.4 | 76.5 | 16.8 | 14.0 | 16.3 | 14.0 | 177.0 |
| WG-08 | 77.1 | 115.9 | 7.4 | 2.8 | 4.9 | 1.3 | 209.4 |
| WG-09 | 87.6 | 103.9 | 8.4 | 3.6 | 6.5 | 1.7 | 211.7 |
| WG-10 | 105.8 | 78.0 | 8.3 | 5.1 | 11.0 | 5.2 | 213.4 |
| WG-11 | 77.6 | 102.7 | 15.7 | 11.5 | 18.2 | 13.6 | 239.3 |
| WG-12 | 74.5 | 102.3 | 19.1 | 15.0 | 16.5 | 15.1 | 242.5 |
| WG-13 | 135.3 | 70.4 | 11.5 | 6.4 | 12.7 | 11.7 | 248.0 |
| WG-14 | 137.5 | 72.0 | 6.8 | 9.1 | 14.6 | 11.8 | 251.8 |
| WG-15 | 97.6 | 105.2 | 19.6 | 14.9 | 21.0 | 13.8 | 272.1 |
| WG-16 | 133.0 | 132.4 | 11.9 | 5.0 | 0.0 | 6.1 | 288.1 |
| WG-17 | 168.2 | 116.8 | 24.6 | 17.9 | 21.3 | 15.6 | 304.4 |
| WG-18 | 110.9 | 117.0 | 23.7 | 17.3 | 33.5 | 14.3 | 316.7 |
| WG-19 | 171.4 | 96.0 | 12.7 | 5.7 | 27.0 | 11.2 | 324.0 |
| WG-20 | 157.0 | 125.3 | 24.6 | 17.9 | 22.6 | 15.7 | 363.1 |
| WG-21 | 218.6 | 116.0 | 19.8 | 9.6 | 39.4 | 19.3 | 422.7 |
| WG-22 | 252.0 | 166.2 | 17.3 | 5.9 | 21.6 | 5.1 | 468.1 |
| WG-23 | 268.1 | 167.0 | 22.5 | 14.1 | 18.0 | 34.5 | 524.2 |
| WG-24 | 441.5 | 137.2 | 20.1 | 10.2 | 14.9 | 12.2 | 636.1 |
| WG-25 | 312.0 | 296.0 | 26.8 | 18.2 | 13.7 | 15.0 | 681.7 |
| WG-26 | 1307.0 | 276.9 | 56.7 | 46.0 | 23.7 | 22.2 | 1732.5 |
| Mean | 180.7 | 114.8 | 15.9 | 10.6 | 15.3 | 11.1 | 346.0 |

As shown in Table 1, analysis of 26 brands of WG revealed that the total concentration of 6 species of PAH was 129 ppb at the minimum and 1733 ppb at the maximum. The total mean value was 346 ppb. Seven brands showed values less than 200 ppb, 13 brands showed values in the range of 200-399 ppb, and 6 brands showed values not less than 400 ppb, thus suggesting a large variation.

The results of analysis of 9 commercial brands of lanolin are shown in Table 2. Thus, the minimum value was 144 ppb and the maximum value was 523 ppb. The mean value was 287 ppb. Three brands showed values less than 200 ppb, 2 brands showed values less than 300 ppb, and 4 brands showed values not less than 300 ppb.

## Table 2  Results of analysis for PAH in lanolin

(Unit: ppb)

| Sample No. | F | BbF | BkF | BaP | IcP | BgP | Total |
|---|---|---|---|---|---|---|---|
| LA-01 | 61.4 | 67.4 | 5.0 | 1.1 | 4.7 | 4.5 | 144.1 |
| LA-02 | 53.9 | 111.1 | 10.3 | 3.2 | 0.0 | 1.7 | 180.2 |
| LA-03 | 79.7 | 105.7 | 7.6 | 2.5 | 1.7 | 2.2 | 199.4 |
| LA-04 | 94.9 | 111.0 | 8.1 | 1.4 | 6.4 | 5.7 | 227.5 |
| LA-05 | 191.9 | 71.9 | 13.8 | 4.5 | 13.8 | 2.9 | 298.8 |
| LA-06 | 201.7 | 72.2 | 13.3 | 4.2 | 10.5 | 2.3 | 304.2 |
| LA-07 | 195.7 | 77.2 | 14.1 | 4.2 | 31.5 | 2.9 | 325.6 |
| LA-08 | 185.2 | 146.3 | 15.6 | 6.9 | 16.8 | 8.3 | 379.1 |
| LA-09 | 321.6 | 154.8 | 17.4 | 6.3 | 15.2 | 8.0 | 523.3 |
| Mean | 154.0 | 102.0 | 11.7 | 3.8 | 11.2 | 4.3 | 286.9 |

The results of analysis of 19 commercial brands of lanolin alcohol are shown in Example 1 (Table 3) which appears later. According to this analysis, the minimum value was 234 ppb, the maximum value was 6192 ppb, and the mean value was 1585 ppb. There was no brand that gave a value less than 200 ppb, 5 brands showed values in the range of 200-500 ppb, 6 brands showed values in the range of 500-1000 ppb, and 8 brands showed values not less than 1000 ppb. Thus, a large variation was found.

The results of analysis of 11 brands of distilled lanolin alcohol are shown in Example 1 (Table 4) which appears hereinafter. According to this analysis, the minimum value was 215 ppb, the maximum value was 425 ppb, and the mean value was 311 ppb. No brand of distilled alcohol gave a value less than 200 ppb, 6 showed values in the range of 200-300 ppb, 3 showed values in the range of 300-400 ppb, and 2 showed values not less than 400 ppb.

It is, therefore, clear that PAH in lanolin can be accurately estimated by the quantitation method of this invention.

The method for determining the PAH removing activity of activated carbon is now described. To 10 g of a lanolin load is added 0.1 g-5 g of activated carbon and an adsorption process is allowed to proceed at a predetermined constant temperature for a predetermined time under stirring or shaking. The mixture is then allowed to stand for sedimentation and the supernatant is filtered to remove the carbon. The PAH remaining in the filtrate is assayed by the above quantitation method. On logarithmic paper, the amount of PAH adsorbed on each gram of activated carbon and the residual PAH concentration are plotted on the ordinate and abscissa, respectively, to construct an adsorption isotherm. From this adsorption isotherm, the amount of PAH that will be adsorbed per gram carbon to give a total residual PAH concentration of 20 ppb is determined and this value is used as the PAH removing activity value of the particular activated carbon per 10 g of the load at the desired target post-adsorption PAH concentration of 20 ppb under the conditions used.

By substituting this activity value in the following equation 1, the amount of activated carbon required to attain the desired ultimate PAH concentration can be easily estimated.

$$(a - b) / z = c \qquad \text{Equation 1}$$

where $[z]$ ppb/g carbon means the PAH removing activity of the activated carbon; $[a]$ ppb means the total amount of PAH in the load before treatment; $[b]$ ppb means the desired concentration of residual PAH after treatment, and $[c]$ g means the necessary amount of activated carbon.

To calculate the amount of activated carbon required in the event the target residual PAH concentration is altered, the PAH removing activity can be determined from the above adsorption isotherm and the value be similarly substituted into Equation 1.

In accordance with the removing method of this invention, PAH in a lanolin load can be selectively eliminated economically and easily without affecting the inherent properties of lanolin by using an activated carbon verified to be the most active of all in amount exceeding the required amount calculated from Equation 1 under optimum conditions of adsorption.

The species of PAH which can be removed in accordance with this invention are mostly the above-mentioned 6 species which are highly suspected of carcinogenicity but the reduction of residues is achieved by this invention for PAH species other than these 6 species as well. Among such additional species are the following 8 species. Of course, still other species of PAH are also removed by the method of this invention.

The 8 species mentioned above are benz(a)anthracene, phenanthrene, anthracene, pyrene, triphenylene, chrysene, 7,12-dimethylbenz(a)anthracene, and dibenz(a,h)anthracene.

The activated carbon treatment described above for removal of PAH can be carried out in a solution of the load in a solvent or in a solventless system. The solventless system is disadvantageous in that it takes a fairly long time for PAH to diffuse and become adsorbed on the pores of activated carbon as compared with the solvent system but if a sufficient duration of contact is provided, the same result as that of the solvent system can be obtained. Ideally the removing activity should be determined in a substantially steady state of adsorption but in this invention determinations are made even before an adsorption equilibrium has been established. Therefore, depending on the state of contact with activated carbon during treatment (shaking or stirring speed), different removing activity values are generated even if the amount of activated carbon, miscella concentration, temperature, time and other treating conditions are held constant. However, when the state of contact is constant, the removing activity has sufficient reproducibility and, therefore, the method can be effectively used for exploring the optimum treating conditions or for determining the amount of activated carbon required under uniform conditions of contact.

The solvent that can be used for the above-mentioned solvent system is not particularly restricted for modified lanolins other than WG and lanolin, thus including, among others, various hydrocarbons such as pentane, hexane, cyclohexane (abbreviated as CH), heptane (HP), n-octane, isooctane, petroleum ether, etc., aromatic hydrocarbons such as benzene, toluene, xylene, etc., halogenated hydrocarbons such as methylene chloride, chloroform, trichloroethylene, tetrachloroethylene, carbon tetrachloride, etc., alcohols such as methanol, ethanol, n-propanol, isopropyl alcohol (IPA), butanol, etc., ketones such as acetone, methyl ethyl ketone (MEK), methyl isobutyl ketone, diethyl ketone, etc., ester solvents such as methyl acetate, ethyl acetate, propyl acetate, isopropyl acetate, butyl acetate, and so on. These solvents can be used alone or in combination. For WG and lanolin, any of the above-mentioned solvents excepting hexane can be employed. Selection of a solvent suitable for an actual operation can be easily accomplished by the above-described determination of PAH removing activity. It should be understood that the above solvents can be used in combination with water. Thus, such combinations as HP-IPA-water, MEK-water and HP-MT-water can be mentioned by way of example.

The temperature of adsorption treatment also has important bearings on removing activity. The adsorption of PAH is feasible at or below ambient temperature. As the temperature is increased, the amount of PAH adsorbed per unit weight of activated carbon is also increased so that a higher removing activity value is obtained. Therefore, in the solventless system, the temperature is preferably increased up to a critical level beyond which colorization takes place. In the solvent system, even when the temperature is higher than the boiling point, adsorption treatment can be advantageously carried out under elevated pressure to reduce the required amount of activated carbon. However, adsorption treatment under elevated pressure has the disadvantage of high equipment cost. If it is the case, the treatment is preferably carried out at a temperature a few degrees below the boiling point of the system.

The activated carbon decolorizing purification of technical lanolin was reportedly effective in achieving a decolorizing effect upon cooling of a hexane miscella down to 20-25°C and is therefore clearly different from the PAH removing method of this invention.

Activated carbon is available in many kinds according to the starting material, method of activation, and morphology. As classified by starting material, coal-type activated carbons based on peat, lignite, brown coal, etc., and wood-type activated carbons based on sawdust, waste fiber, charcoal, wood, cellulose, pulp waste liquor, palm shells, coconut shells, etc. are available. The method of activation includes chemical activation using zinc chloride or the like and gas activation using steam, carbon dioxide gas, air or the like. As to the morphology of carbon, powdered carbon for batch processes and granular carbon for fixed-bed or fluidized-bed operations can be mentioned. Regardless of the type of carbon, an economically advantageous grades of carbon and treating conditions can be selected by the determination of PAH removing activity according to this invention.

The commercial technology for activated carbon treatment includes a batch process, a fluidized-bed process and a fixed-bed process and any of these processes can be employed without trouble in the practice of this invention. In the case of a batch process, a predetermined proportion of activated carbon is

EP 0 632 267 A1

added to the load and the mixture is agitated by stirring, bubbling of a gas or liquid circulation at a predetermined temperature so as to insure a sufficient contact between the carbon and the load and the carbon is then removed by filtration or the like.

The necessary height of the fixed bed can be determined by analysis of the load. Generally speaking, to prevent the trouble of insufficient removal due to a short pass, the column length/column diameter ratio is preferably not less than 1.5. The linear velocity is preferably as low as possible and an empty column linear velocity (material feed rate/sectional area of fixed bed) within the range of about 0.5 cm/min. to about 20 cm/min. is generally recommended. If the space velocity is too low, the amount of treatment per unit time is decreased, while an excessively high space velocity leads to an increased pressure loss and a poor contact with the activated carbon so that the amount of treatment per unit amount of the carbon is decreased. Unlike the batch process, the useful life of the carbon column (adsorption breakthrough) is longer than the life calculated by means of Equation 1 because of the concentration gradient from the column inlet to the column outlet. This life-extending effect is closely related with the column length and tends to be greater as the column length is increased.

The inventors of this invention further discovered, for the first time, that in the production of various lanolin derivatives from WG or lanolin, vacuum distillation of the starting material WG or lanolin under specified conditions removes PAH residues in the starting materials and provides the desired lanolin derivatives free of PAH.

Nonetheless, since the conditions of the above vacuum distillation overlap the distillation range of lanolin alcohols in a large measure, the consideration of the elimination efficiency and product yield prevents direct application of this vacuum distillation process to lanolin alcohols. According to the above new finding by the inventors of this invention, the desired PAH-free lanolin alcohols, and lanolin fatty acids as well, can be produced by a process which comprises subjecting the starting material WG or lanolin to vacuum distillation according to this invention and, then, to saponification and extraction.

Therefore, this invention further provides a method of producing PAH-free lanolin derivatives from WG or lanolin characterized by subjecting the starting material to vacuum distillation at a temperature of 150-250°C and a degree of vacuum in the range of 0.1-0.001 Torr to thereby remove PAH residues beforehand.

The above method is particularly advantageous when the desired lanolin derivative is a lanolin alcohol and, in this case, the WG or lanolin from which PAH has been removed by the above procedure is decomposed by saponification and extracted in the per se conventional manner, whereby the desired lanolin alcohol and, as concomitant products, lanolin fatty acids can be obtained.

The above vacuum distillation method of this invention can be utilized not only for the production of lanolin alcohols but also for the production of various lanolin derivatives. Among such derivatives are liquid lanolin (low-melting lanolin; LL) and high-melting lanolin (hard lanolin; HL) which can be obtained by fractionation of WG or lanolin, lanolin esters such as lanolin acetate which can be obtained by esterifying WG or lanolin, and lanolin ethers such as adducts of polyoxyethylene, polyoxypropylene, etc. to lanolin, among others. From any of these lanolins, the desired PAH-free product can be obtained by application of the vacuum distillation method of this invention. The production of such varied lanolin derivatives can be performed in the conventional manner except that the vacuum distillation of this invention is interposed. The conditions of vacuum distillation for the starting material WG or lanolin can be judiciously selected within the above-mentioned ranges according to the type of starting material, particularly its PAH content and the degree of elimination of PAH desired in the product.

The inventors of this invention further discovered that when WG or lanolin is previously treated with boric acid prior to said vacuum distillation, the free lanolin alcohol in the starting material is converted to a boric acid ester with the result that the loss due to vacuum distillation is minimized.

Therefore, this invention further provides a method of producing PAH-free WG or lanolin characterized by treating WG or lanolin with boric acid in the first place and, then, subjecting the so-treated WG or lanolin to vacuum distillation at a temperature of 150-250°C and a degree of vacuum in the range of 0.1-0.001 Torr to thereby remove the residual PAH.

The above-mentioned boric acid treatment can be carried out using boric acid ($H_3BO_3$), boric anhydride ($B_2O_3$) or the like. The amount of such a reagent is about 0.5-5 molar equivalents, preferably about 1-3 molar equivalents, relative to the theoretical amount required to give the boric acid triester based on the hydroxyl value of the WG or lanolin. Thus, WG or lanolin contains esters having hydroxy groups derived from free lanolin alcohols and hydroxy-fatty acids and in the boric acid treatment mentioned above, the boric acid esterification of lanolin alcohols competes with the hydroxy-esterification of hydroxy-fatty acid esters. Therefore, this factor must be taken into account in calculating the required amount of boric acid based on the hydroxyl value. The above boric acid treatment (boric acid esterification) can be carried out at a temperature of about 50-150°C, preferably about 100-120°C, for about 0.5-8 hours. While this es-

7

terification reaction can be carried out at whichever of atmospheric pressure and subatmospheric pressure, it is generally conducted under a reduced pressure of not higher than 100 Torr, preferably 30-1 Torr.

After the above boric acid esterification reaction, the resulting esterified material is subjected to the vacuum distillation treatment of this invention, whereby the PAH present in the load can be selectively distilled off. The ester thus obtained as a distillation residue is saponified in the per se conventional manner and washed with water to remove boric acid, whereby the desired WG or lanolin with a reduced PAH content can be obtained. Particularly in accordance with the method of this invention involving said boric acid treatment, the free alcohol fraction is substantially not distilled during the vacuum distillation treatment. Therefore, the method is advantageous in that the alcohol yield is not adversely affected.

Of course, the WG or lanolin obtained by the boric acid esterification and subsequent vacuum distillation according to this invention can be subjected to the above-mentioned fractionation, esterification, polyoxyethylene addition reaction, etc. to obtain various PAH-free lanolin derivatives.

The term 'lanolin' as used in this specification means, in its broad sense, WG and various lanolin derivatives which are obtainable by purification/and derivatization procedures using WG as the main starting material.

It should also be understood that, in this specification, each of such lanolin species other than WG and lanolin, obtained from WG, is sometimes referred to as a lanolin derivative. Among such lanolin derivatives are low-melting liquid lanolin (LL) and high-melting hard lanolin (HL), both of which are obtainable by fractionation of lanolin, lanolin fatty acid fraction, soft and hard lanolin fatty acids obtainable by fractionation thereof, distillation products thereof (lanolin fatty acids), lanolin alcohol and its distillates, cholesterol, lanosterol, esters of lanolin fatty acids with alcohols or sterols, cholesterol fatty acid esters, ethers of lanolin, lanolin fatty acids, lanolin alcohols and sterols with polyoxyethylene or the like, fatty acid esters of lanolins or lanolin alcohols. In addition, fatty acid esters of sterols, inclusive of plant sterols, and dihydrocholesterol, etc. are also included in the concept of said lanolin derivative.

According to the invention, PAH occurring in lanolin at the ppb level can be assayed with accuracy, good reproducibility and great ease. In addition, the PAH removing activity of activated carbon can be determined and, therefore, an economical amount of carbon that is just necessary for removal of PAH and the corresponding optimal treating conditions can be easily selected.

Furthermore, by the method of the invention employing activated carbon for the adsorption treatment of lanolin, safe lanolin with a reduced PAH content can be obtained.

Moreover, in accordance with this invention, PAH residues can be further removed by vacuum distillation, with or without prior boric acid esterification treatment and the resulting PAH-free WG or lanolin is of great value as a starting material for various lanolin derivatives inclusive of lanolin alcohols.

The low-PAH lanolin thus obtained has not been altered in fundamental properties from the lanolin prior to the activated carbon and other treatments and, therefore, can be used with greater safety in the pharmaceutical, cosmetic and other fields where lanolin has been traditionally used.

BEST MODE OF PRACTICING THE INVENTION

The following examples are intended to describe this invention in further detail.

Example 1 GPC conditions

A column measuring 25 mm in inside dia. and 770 mm long is packed with 130 g of a styrene-divinylbenzene copolymer (200-300 mesh, Bio-Rad Laboratories; BioBeads SX-3, cutoff mol. wt. = 2000), while 1 g of the starting material is dissolved in 10 ml of dichloromethane and the resulting solution is filtered through a 0.2 $\mu$m filter. Five (5) ml of the sample filtrate is injected into the above column and elusion is carried out with 4 ml/min. of dichloromethane. As a result, the esters, lanolin fatty acids and lanolin alcohols emerge in the first 256 ml fraction and, immediately following this, PAH emerges in the subsequent 104 ml fraction (cumulative total:360 ml). The PAH-containing fraction is evaporated at 60°C and the residue is thoroughly washed with a total of 6 ml of acetonitrile and concentrated to dryness under reduced pressure or in a nitrogen stream (Sample A). Sample A is dissolved in 100 $\mu$l of acetonitrile and an appropriate amount, 10-50 $\mu$l, of the solution is injected into an HPLC equipped with a fluorescence detector. The quantitation is made by the absolute calibration method.

8

HPLC conditions

Column: Novapak C18, 3.9-300 mm (30 ° C)
Mobile phase: acetonitrile/water = 70/30
Flow rate: 1.0 ml/min.
Detection: The exciting and measuring wavelengths for each PAH are shown below. [Detector: Japanese Spectroscopic 820-FP fluorescence detector].

| PAH | Exciting wavelength (nm) | Measuring wavelength (mm) | Retention time (min.) | Sensitivity Area/ng PAH |
|---|---|---|---|---|
| F | 284 | 470 | 11.3 | 574,627 |
| BbF | 300 | 411 | 23.1 | 640.829 |
| BkF | 300 | 411 | 24.3 | 7,696,765 |
| BaP | 300 | 411 | 26.5 | 4,454,364 |
| IcP | 300 | 500 | 38.0 | 180,361 |
| BgP | 300 | 411 | 38.4 | 1,785,894 |

Commercial lanolin alcohols were analyzed under the above conditions. The results are set forth in Tables 3 and 4.

## Table 3   Results of analysis for PAH in lanolin alcohols

(Unit: ppb)

| Sample No. | F | BbF | BkF | BaP | IcP | BgP | Total |
|---|---|---|---|---|---|---|---|
| AL-01 | 70.6 | 121.5 | 14.2 | 8.2 | 11.3 | 7.7 | 233.5 |
| AL-02 | 121.6 | 136.0 | 19.3 | 8.6 | 11.8 | 0.0 | 297.3 |
| AL-03 | 163.2 | 213.1 | 19.5 | 7.6 | 3.9 | 19.2 | 426.5 |
| AL-04 | 163.2 | 213.1 | 19.5 | 7.6 | 19.2 | 3.9 | 426.5 |
| AL-05 | 194.9 | 239.5 | 17.1 | 6.1 | 18.5 | 6.5 | 482.6 |
| AL-06 | 318.8 | 218.4 | 22.8 | 6.6 | 9.5 | 9.1 | 585.2 |
| AL-07 | 322.3 | 231.5 | 23.4 | 9.9 | 15.6 | 110.1 | 712.8 |
| AL-08 | 311.0 | 341.2 | 26.8 | 13.7 | 18.5 | 10.4 | 721.6 |
| AL-09 | 311.0 | 341.2 | 26.8 | 13.7 | 18.5 | 10.7 | 721.6 |
| AL-10 | 371.6 | 262.8 | 29.1 | 17.1 | 34.1 | 26.3 | 741.0 |
| AL-11 | 509.6 | 289.0 | 26.7 | 8.6 | 9.2 | 25.9 | 869.0 |
| AL-12 | 564.8 | 309.1 | 43.7 | 38.0 | 22.7 | 24.5 | 1002.8 |
| AL-13 | 669.9 | 243.5 | 34.7 | 23.5 | 66.6 | 20.1 | 1058.3 |
| AL-14 | 1087.8 | 265.5 | 54.9 | 38.7 | 39.8 | 17.8 | 1504.5 |
| AL-15 | 934.7 | 434.8 | 73.0 | 66.8 | 55.6 | 45.6 | 1610.5 |
| AL-16 | 1440.7 | 1073.0 | 67.7 | 25.2 | 0.0 | 0.0 | 2606.7 |
| AL-17 | 3081.1 | 984.4 | 217.0 | 222.8 | 182.8 | 103.7 | 4791.8 |
| AL-18 | 4112.6 | 129.1 | 305.1 | 318.6 | 129.4 | 140.7 | 5135.5 |
| AL-19 | 3478.0 | 1430.8 | 353.6 | 357.5 | 278.9 | 295.1 | 6192.2 |
| Mean | 959.3 | 393.6 | 73.4 | 63.1 | 49.8 | 46.2 | 1585.3 |

Table 4    Results of analysis for PAH in distilled
lanolin alcohols

(Unit: ppb)

| Sample No. | F | BbF | BkF | BaP | IcP | BgP | Total |
|---|---|---|---|---|---|---|---|
| AD-01 | 48.1 | 112.3 | 11.5 | 9.2 | 14.6 | 19.3 | 215.3 |
| AD-02 | 106.7 | 98.4 | 14.8 | 6.1 | 3.2 | 12.6 | 241.8 |
| AD-03 | 117.5 | 100.9 | 15.8 | 6.0 | 3.4 | 12.7 | 256.3 |
| AD-04 | 41.6 | 78.7 | 20.4 | 20.9 | 33.1 | 67.6 | 262.3 |
| AD-05 | 97.5 | 135.4 | 14.5 | 8.2 | 20.5 | 11.2 | 287.4 |
| AD-06 | 69.9 | 149.8 | 26.7 | 25.3 | 11.8 | 22.3 | 305.3 |
| AD-07 | 43.9 | 94.8 | 25.2 | 24.7 | 37.3 | 90.0 | 315.9 |
| AD-08 | 139.7 | 127.4 | 17.2 | 15.0 | 30.0 | 19.4 | 348.7 |
| AD-09 | 75.0 | 110.0 | 18.4 | 14.3 | 17.7 | 33.7 | 269.2 |
| AD-10 | 171.5 | 149.7 | 16.9 | 15.6 | 29.1 | 23.2 | 406.0 |
| AD-11 | 181.0 | 177.6 | 16.2 | 9.1 | 26.4 | 12.6 | 422.9 |
| Mean | 104.8 | 126.3 | 17.7 | 13.5 | 20.6 | 29.5 | 302.8 |

To check the reproducibility of this quantitation method, Sample AD-11 in Table 4 was analyzed in 5 replicates. The results are shown in Table 5. It is clear from the data that the reproducibility of the method is high.

Table 5    Reproducibility of PAH assay

(Unit: ppb)

| Repli-cate | F | BbF | BkF | BaP | IcP | BgP | Total |
|---|---|---|---|---|---|---|---|
| 1st | 135.8 | 164.3 | 15.1 | 8.0 | 25.3 | 11.4 | 359.9 |
| 2nd | 181.0 | 177.6 | 16.2 | 9.1 | 26.4 | 12.6 | 422.9 |
| 3rd | 148.8 | 164.1 | 16.3 | 8.9 | 20.8 | 10.8 | 369.7 |
| 4th | 148.3 | 169.0 | 16.1 | 8.2 | 22.4 | 9.6 | 373.6 |
| 5th | 152.7 | 174.5 | 17.3 | 8.7 | 21.8 | 11.3 | 386.3 |
| Average AV | 153.3 | 169.9 | 16.2 | 8.6 | 23.3 | 11.1 | 382.5 |
| Standard deviation Std | 16.7 | 6.1 | 0.8 | 0.5 | 2.4 | 1.1 | 24.5 |
| CV % | 10.9 | 3.6 | 4.9 | 5.6 | 10.3 | 9.7 | 6.4 |

In the table, CV % is the standard deviation/mean x 100. The smaller the value is, the smaller is the variation of measured values.

A PAH recovery test for this quantitation method was carried out using standard solutions containing no lanolin alcohol (PAH concentrations 30-50 ppb) and a spike test was carried out by adding known amounts of PAH (10-12 ppb, respectively) to the lanolin alcohol. As a result, the rates of recovery from the standard solutions except F = 71% were invariably not less than 90% (BbF = 93%, BkF = 90%, BaP = 94%, BgP = 103%, IcP = 99%), thus being fully satisfactory.

The results of the spike test were evaluated in terms of the recovery rate expressed by the following equation. In consideration of the fact that the level of addition was as low as 10 ppb, the recovery rates thus found were fully satisfactory as were the results of the above recovery test using standard solutions. (F = 93%, BbF = 98%, BkF = 97%, BaP = 91%, BgP = 103%, IcP = 110%).

Recovery rate (%) = (Measured value after addition) x 100/(measured value before addition + amount added)

Example 2

Ten (10) grams of lanolin alcohol (Sample AL-13 in Table 3) was dissolved in HP/IPA = 90/10 (by weight) to prepare a 10% solution. On the other hand, crushed coal carbon Taiko GL-30 (Futamura Chemical Industries; specific surface area = 1060 m$^2$/g, total pore volume = 0.56 ml/g, 0-10 Å = 0.20 ml/g, 10-50 Å = 0.32 ml/g, 50-100 Å = 0.03 ml/g, 100 Å- = 0.01 ml/g, methylene blue bleaching power = 190 ml/g, iodine adsorption capacity = 1000 mg/g) was pulverized and size-selected (325 mesh, 95% pass). This powdered carbon, 0.25-1 g, was added to portions of the above 10% solution and each mixture was gently shaken (amplitude = 2.5 cm, 130 reciprocations/min.) at 70°C for 1 hour for adsorption treatment. The mixture was then allowed to stand for sedimentation and the supernatant was filtered to remove the carbon. The solvent was removed from the filtrate and the residual PAH was determined by the quantitation method described hereinbefore. On logarithmic paper, the amount of PAH adsorbed per gram of carbon and the residual PAH concentration were plotted on the ordinate and abscissa, respectively, to construct an adsorption isotherm. From this adsorption isotherm, the amount of PAH adsorbed per gram of carbon that would give a residual PAH concentration of 20 ppb was determined. As a result, the PAH-removing activity of GL30 was 1900 ppb/g carbon.

Table 6   Addition level of GL30 vs. residual PAH concentration

(Unit: ppb)

| Activated carbon code | Solvent | Amount of carbon g | Concentration before treatment ppb | Residual concentration ppb |
|---|---|---|---|---|
| GL30 | HP/IPA=90/10 | 0.25 | 1058.3 | 170.4 |
| GL30 | HP/IPA=90/10 | 0.50 | 1058.3 | 23.6 |
| GL30 | HP/IPA=90/10 | 0.70 | 1058.3 | 9.0 |

To 100 g of a 10% solution containing 10 g of lanolin alcohol AL-06 in a pretreatment concentration of 585 ppb was added 0.3 g of the same activated carbon as above for adsorption treatment. The total PAH content after this treatment was 10 ppb. The necessary amount of activated carbon calculated from the removing activity, as below, was close to 0.3 g. It is recognized that the two values well accords with each other.

(585-20)/1900 = 0.297

Example 3

Using the same lanolin alcohol and activated carbon as used in Example 2 but different solvents, the removing activity for a residual concentration of 20 ppb was calculated in each case. The results are shown in Table 7. It is clear from this example that the removing activity of carbon can be varied with the treating conditions and the optimum treating conditions can be established with comparative ease and accordingly calculating the removing activity values according to this invention.

**Table 7**

(Unit: ppb)

| Amount of activated carbon (g) | Total residual concentration | | |
|---|---|---|---|
| | 88.7% MEK | HP/IPA =95/5 | HP |
| 0.5 | 16.3 | 49.2 | 133.1 |
| 1.0 | -- | 29.7 | -- |
| 2.0 | 8.6 | -- | 28.9 |
| 5.0 | 5.4 | 5.7 | 14.4 |
| Removing activity | 3,200 | 800 | 350 |

Example 4

The removing activity of wood-based powdered carbon 'Taiko K' (Futamura Chemical Industries; specific surface area = 1014 $m^2$/g, total pore volume = 0.51 ml/g, mean pore radius = 10.1 Å, the pore radius representing the largest volume on the pore size distribution curve = 5.5 Å; 0-10 Å = 0.10 ml/g, 10-50 Å = 0.28 ml/g, 50-100 Å = 0.07 ml/g, 100 Å- = 0.07 ml/g, methylene blue bleaching power = 200 ml/g, pH = 5.7) was similarly determined. Using lanolin alcohol Sample AL-06, a 10% solution was prepared using 88.7% MEK. To 100 g of this solution was added 0.2 g-2.0 g of the activated carbon and the mixture was gently shaken on a reciprocating shaker (130 reciprocations/min., amplitude = 2.5 cm) at 70°C for 60 minutes. The results are shown in Table 8. The removing activity at a residual concentration of 20 ppb was 980 ppb/g carbon (Example 4-1).

Similarly, using sample AL-13, a 10% solution was prepared using HP. To 100 g of this solution was added 0.5 g-2.0 g of activated carbon and the mixture was treated at 70°C for 60 minutes. The results are shown in Table 8. The removing activity at a residual concentration of 20 ppb was 820 ppb/g carbon (Example 4-2).

Table 8

| Addition level of activated carbon (g) | 88.7% MEK, total residual concentration (ppb) | Addition level of activated carbon (g) | HP, total residual concentration (ppb) |
|---|---|---|---|
| 0.2 | 85.1 | 0.2 | ---- |
| 0.5 | 25.1 | 0.5 | 47.2 |
| 1.0 | 9.7 | 1.0 | 25.4 |
| 2.0 | 3.0 | 2.0 | 13.8 |
| Removing activity | 980 | Removing activity | 820 |

Similarly a 10% solution of Sample AL-13 was prepared using 88.7% MEK. To 100 g of this solution was added 1.0 g of activated carbon and the mixture was treated at 70°C for 1 and 48 hours. As a result, the concentration was 21 ppb after 1 hour and 2.4 ppb after 48 hours (Example 4-3).

The adsorption treatment according to Example 4-3 was repeated except that in lieu of the reciprocating shaker, a 300 rpm stirrer equipped with an impeller measuring 5 cm long and 1 cm wide was employed (Example 4-4). The result was 2.2 ppb.

It is apparent from the above results that the time to equilibrium varies according to mixing conditions, with the consequent variation in removing activity.

12

Example 5

The removing activity of palm shell-based activated carbon 'Taiko CW130B' (Futamura Chemical Industries; specific surface area = 1150 m²/g, total pore volume = 0.50 ml/g; 0-10 Å = 0.05 ml/g, 10-50 Å = 0.60 ml/g, 50-100 Å = 0.15 ml/g, 100 Å- = 0.28 ml/g; methylene blue bleaching power = 210 ml/g, iodine adsorption capacity = 1110 mg/g, pH = 9.8; grain size: 0.5-1.7 mm pass = 98%) was determined under the conditions of a 10% solution in 88.7% MEK, 70°C and 5 hours. The removing activity found was 400 ppb/g carbon.

Example 6

The removing activity of a wood-based activated carbon 'Taiko SG' (Futamura Chemical Industries; specific surface area = 1050 m²/g, total pore volume = 0.84 ml/g, mean pore radius = 13.7 Å, the pore radius representing the largest volume on the pore size distribution curve = 11.3 Å; 0-10 Å = 0.05 ml/g, 10-50 Å = 0.57 ml/g, 50-100 Å = 0.14 ml/g, 100 Å- = 0.05 ml/g; methylene blue bleaching power = 210 ml/g, iodine adsorption capacity = 1110 mg/kg, pH = 9.8, grain size: 0.5-1.7 mm pass = 98%) was similarly determined under the conditions of a 10% solution in 88.7% MEK, 70°C and 2 hours. The activity found was 390 ppb/g carbon.

Example 7

To 10 g of Sample AL-13 was added 1 g of 'Taiko K', a powdered activated carbon, and the mixture was stirred at 70°C for 1 or 6 hours. The activated carbon was then filtered off and the PAH contained in the filtrate was assayed. Similar procedures were carried out using a treating temperature of 100°C and an agitation time of 1 hour. Furthermore, 1 g of the same activated carbon as above was added to 100 g of a 10% solution in 88.7% MEK and the mixture was treated at 70°C or 40°C for 1 hour. The respective results are shown in Table 9.

## Table 9

(Unit: ppb)

| Determina-tion | F | BbF | BkF | BaP | IcP | BgP | Total |
|---|---|---|---|---|---|---|---|
| AL-13, untreated | 669.9 | 243.5 | 34.7 | 23.5 | 66.6 | 20.1 | 1058.3 |
| Treated for 1 hr | 7.9 | 5.0 | 0.3 | 0.2 | 0.0 | 0.1 | 13.5 |
| Treated for 6 hr | 3.9 | 1.9 | 0.1 | 0.1 | 0.2 | 0.0 | 6.2 |
| 100°C | 2.7 | 1.3 | 0.1 | 0.1 | 0.1 | 0.0 | 4.3 |
| MEK, 70°C | 1.3 | 0.9 | 0.0 | 0.0 | 0.0 | 0.0 | 2.2 |
| MEK, 40°C | 2.0 | 2.3 | 0.1 | 0.0 | 0.1 | 0.0 | 4.5 |

Even when the sample was not diluted with a solvent, the total concentration fell to 13.5 ppb after 1 hour of treatment and to 6.2 ppb after 6 hours. It is apparent from the results that although it takes a long time for an adsorption equilibrium to be established, PAH can be sufficiently removed by activated carbon adsorption treatment. Moreover, the result of 1-hour treatment at 70°C in the absence of a solvent (13.5 ppb), the result of 1-hour treatment at 100°C (4.3 ppb), and the results of treatment after MEK dilution at 70°C (2.2 ppb) and 40°C (4.5 ppb) indicate that the adsorption performance of activated carbon can be better exploited at higher temperatures.

Example 8

Using the same activated carbon and lanolin alcohol as in Example 7, and, as the solvent system, 88.7% MEK and IPA, solutions of 10-50% concentrations were prepared and the adsorption treatment was carried out at 70°C under stirring (300 rpm/min., stirrer impeller = 5 cm x 1 cm) for 1 hour. The results are shown in Table 10. As a result, the removing effect was invariably high, although a comparatively higher removing effect was obtained with IPA than with MEK. It is also apparent that within the range of no remarkable gain in viscosity, namely about 10-50% concentrations, there is substantially no concentration dependency in removing effect.

## Table 10

(Unit: ppb)

| Sample code | F | BbF | BkF | BaP | IcP | BgP | Total |
|---|---|---|---|---|---|---|---|
| Untreated material | 669.9 | 243.5 | 34.7 | 23.5 | 66.6 | 20.1 | 1058.3 |
| MEK 10% | 1.3 | 0.9 | 0.0 | 0.0 | 0.0 | 0.0 | 2.2 |
| MEK 20% | 1.5 | 1.0 | 0.0 | 0.0 | 0.0 | 0.0 | 2.5 |
| MEK 30% | 1.2 | 0.8 | 0.0 | 0.0 | 0.0 | 1.7 | 3.7 |
| MEK 40% | 1.4 | 1.5 | 0.1 | 0.0 | 0.0 | 0.0 | 3.0 |
| MEK 50% | 1.0 | 0.7 | 0.1 | 0.0 | 0.0 | 0.0 | 1.8 |
| IPA 10% | 1.7 | 0.6 | 0.0 | 0.0 | 0.0 | 0.0 | 2.3 |
| IPA 20% | 1.3 | 1.0 | 0.0 | 0.0 | 0.0 | 0.0 | 2.4 |
| IPA 30% | 1.0 | 0.8 | 0.0 | 0.0 | 0.0 | 0.0 | 1.9 |
| IPA 40% | 1.0 | 0.5 | 0.0 | 0.0 | 0.0 | 0.0 | 1.6 |
| IPA 50% | 1.0 | 0.8 | 0.0 | 0.0 | 0.0 | 0.0 | 1.9 |

Example 9

A column measuring 5 cm in inside diameter and equipped with a jacket was packed with 107 g of 'Taiko GL30', a coal-based granular carbon (2.36-0.50 mm pass = 96%, packing density = 0.48 g/ml) (packing height = ca. 12.5 cm). A 10% solution of lanolin alcohol Sample AL-06 in a solvent system of $HP/IPA/H_2O = 92.5/7.0/0.5$ was passed through the carbon-packed column at a linear velocity of 2 cm/min. and a treating temperature of 70°C and the effluent was collected in 2 fractions according to the amount of passage. The solvent was removed from the respective fractions to provide 464 g of treated lanolin alcohol (Treatment 1, about 0-4.3 times the amount of packing carbon) and 498 g (Treatment 2, about 4.3-9 times the amount of packing carbon). The changes from the pretreatment values of PAH are shown in Table 11. The data indicate that PAH can be efficiently removed even by fixed-bed adsorption.

Table 11

(Unit: ppb)

| Sample code | F | BbF | BkF | BaP | IcP | BgP | Total |
|---|---|---|---|---|---|---|---|
| Untreated material | 318.8 | 218.4 | 22.8 | 6.6 | 9.5 | 9.1 | 585.2 |
| Treatment 1 | 4.2 | 1.9 | 0.2 | 0.4 | 0.0 | 0.4 | 7.1 |
| Treatment 2 | 6.0 | 5.1 | 0.1 | 0.3 | 0.0 | 0.7 | 12.2 |

Example 10

A column measuring 1.9 cm in inside diameter and equipped with a jacket was packed with 30 g of 'Taiko GL30', a coal-based crushed carbon, and a 15% solution of Sample AL-06 in 88.7% MEK was passed at a varying linear velocity of 2.1 cm/min., 4.1 cm/min., 11.2 cm/min. or 19.5 cm/min. Each effluent was collected in fractions according to the amount of treatment per activated carbon (0-1 time, 0-5 times and 0-10 times) and the amounts of PAH were determined. The results are shown in Table 12. It is apparent that as the linear velocity is decreased, the amount of treatment per unit amount of activated carbon is increased and the residual PAH concentration is decreased.

Table 12

(Unit: ppb)

| Sample code | | F | BbF | BkF | BaP | IcP | BgP | Total |
|---|---|---|---|---|---|---|---|---|
| Untreated material | | 318.8 | 218.4 | 22.8 | 6.6 | 9.5 | 9.1 | 585.2 |
| Linear velocity | Multiples | | | | | | | |
| 2.1 | 0-1 | 0.7 | 0.4 | 0.0 | 0.1 | 0.1 | 0.0 | 1.3 |
| | 0-5 | 2.5 | 1.5 | 0.2 | 0.4 | 0.1 | 0.0 | 4.7 |
| | 0-10 | 2.3 | 3.6 | 0.1 | 0.1 | 0.1 | 0.1 | 6.3 |
| 4.6 | 0-1 | 2.5 | 1.3 | 0.1 | 0.0 | 0.0 | 0.2 | 4.1 |
| | 0-5 | 3.3 | 2.1 | 0.0 | 0.0 | 0.0 | 0.0 | 5.8 |
| | 0-10 | 2.6 | 8.2 | 0.0 | 0.0 | 0.0 | 0.0 | 10.8 |
| 11.2 | 0-1 | 2.0 | 1.7 | 0.1 | 0.1 | 0.0 | 0.0 | 3.9 |
| | 0-5 | 1.8 | 9.3 | 0.1 | 0.1 | 0.0 | 0.0 | 11.3 |
| | 0-10 | 3.6 | 23.0 | 0.4 | 0.2 | 0.0 | 0.0 | 27.2 |
| 19.5 | 0-1 | 1.7 | 6.6 | 0.1 | 0.2 | 0.0 | 0.1 | 8.7 |
| | 0-5 | 2.9 | 18.7 | 0.3 | 0.2 | 0.0 | 0.0 | 22.1 |
| | 0-10 | 18.8 | 56.7 | 1.2 | 0.6 | 0.0 | 0.2 | 77.5 |

Example 11

The activated carbon used in Example 10 was regenerated by the bake regeneration (high-temperature regeneration) method to a regeneration rate of 88% and using this regenerated carbon, an adsorption treatment at a linear velocity of 4.6 cm/min. was carried out as in Example 10. The results are also shown in the table. These results are comparable with those obtained in Example 10.

## Table 13

(Unit: ppb)

| Sample code | | F | BbF | BkF | BaP | IcP | BgP | Total |
|---|---|---|---|---|---|---|---|---|
| Untreated material | | 318.8 | 218.4 | 22.8 | 6.6 | 9.5 | 9.1 | 585.2 |
| Linear velocity | Multiples | | | | | | | |
| 4.6 | 0-1 | 1.2 | 1.6 | 0.1 | 0.1 | 0.0 | 0.5 | 3.4 |
| | 0-5 | 1.5 | 4.2 | 0.1 | 0.1 | 0.0 | 0.4 | 6.3 |
| | 0-10 | 2.8 | 14.6 | 0.2 | 0.1 | 0.0 | 0.0 | 17.7 |

Example 12

In 88.7% MEK was dissolved 150 g of lanolin alcohol AL-06 at a final concentration of 15%. To this solution was added 15.0 g of powdered activated carbon K and the mixture was stirred at 70°C for 1 hour. The mixture was then filtered to remove the carbon and the solvent was further removed to provide a lanolin alcohol. The results of analysis for PAH before and after the treatment are shown in Table 14 and the general analyses in Tables 15 and 16. The above adsorption treatment with activated carbon caused no remarkable change in the composition and analytical values of the lanolin alcohol.

## Table 14   Results of analysis for PAH

(Unit: ppb)

| Sample | F | BbF | BkF | BaP | IcP | BgP | Total |
|---|---|---|---|---|---|---|---|
| Before treatment | 318.8 | 218.4 | 22.8 | 6.6 | 9.5 | 9.1 | 585.2 |
| After treatment | 3.3 | 3.4 | 0.0 | 0.1 | 2.6 | 0.3 | 9.7 |

Table 15

| General analysis | | | | | | | |
|---|---|---|---|---|---|---|---|
| Sample | GH | AV | SV | OHV | mp (°C) | POV | W/U % |
| Before treatment | 11 | 1.4 | 5.3 | 168 | 58.8 | 17.8 | >200 |
| After treatment | 11 | 1.5 | 4.6 | 167 | 57.8 | 15.3 | >200 |
| W/U represents the hydration capacity of a petrolatum/lanolin alcohol (=9.4/0.6) mixture. | | | | | | | |

Table 16  GLC composition

(Unit: %)

| Component | Before treatment | After treatment |
|---|---|---|
| Cholesterol | 23.0 | 23.1 |
| Cholest-3,5-dien-7-one | 2.7 | 2.0 |
| Desmosterol | 0.8 | 0.9 |
| Lathosterol | 1.0 | 1.1 |
| Dihydrolanosterol | 6.4 | 6.5 |
| Lanosterol | 11.3 | 11.7 |

Example 13

In 90 g of each solvent was dissolved 10 g of lanolin alcohol Sample AL-13. To the resulting solution was added 1.0 g of activated carbon K and the mixture was stirred at 70°C for 1 hour. This mixture was then filtered to remove the carbon and the solvent was further removed to provide a lanolin alcohol. The data after treatment are given in Table 17. The removal rate was as high as 98% or more, indicating that the level of PAH residues can be decreased by activated carbon treatment.

Table 17  Results of analysis for PAH

(Unit: ppb)

| Sample | F | BbF | BkF | BaP | IcP | BgP | Total |
|---|---|---|---|---|---|---|---|
| Untreated AL-13 | 669.9 | 243.5 | 34.7 | 23.5 | 66.6 | 20.1 | 1058.3 |
| HP | 11.7 | 2.7 | 0.1 | 0.1 | 0.2 | 0.0 | 14.8 |
| Cyclohexane | 5.9 | 3.2 | 0.1 | 0.0 | 0.0 | 0.0 | 9.2 |
| HP/IPA=9/1 | 2.4 | 1.9 | 0.0 | 0.0 | 0.0 | 0.0 | 4.4 |
| IPA | 2.6 | 1.7 | 0.1 | 0.1 | 0.0 | 0.0 | 4.4 |

Example 14

Ten (10) grams of lanolin Sample LA-09 was dissolved in hexane to prepare a 10% solution. To this solution was added 0.5 g of powdered activated carbon K and the mixture was stirred at 30°C for 1 hour. After this adsorption treatment, PAH was assayed. The color of the sample was GH=8.5 both before and after treatment and the total PAH was reduced from 523 ppb before treatment to 6.6 ppb after treatment (Example 14-1). The above test procedure was repeated except that WG was used as the starting material. The color was GH=18 both before and after treatment, while PAH decreased from 487 ppb to 3.5 ppb (Example 14-2). The analytical data are presented in Table 18.

Table 18   Results of analysis for PAH

(Unit: ppb)

| Sample | F | BbF | BkF | BaP | IcP | BgP | Total |
|---|---|---|---|---|---|---|---|
| LA-09 | 321.6 | 154.8 | 17.4 | 6.3 | 15.2 | 8.0 | 523.3 |
| Example 14-1 | 2.2 | 4.2 | 0.1 | 0.1 | 0.0 | 0.0 | 6.6 |
| WG | 231.5 | 145.1 | 29.1 | 19.1 | 20.8 | 41.8 | 487.4 |
| Example 14-1 | 1.4 | 2.0 | 0.1 | 0.0 | 0.0 | 0.0 | 3.5 |

Using HP/IPA = 9/1 or IPA, a 10% solution of lanolin Sample LA-09 was prepared. To this solution was added 0.5 g of powdered activated carbon K and the mixture was stirred at 70°C for 1 hour. After this adsorption treatment, the PAH was assayed. The results were 4.3 ppb and 4.5 ppb, respectively.

Example 15

Using a solvent mixture of HP/IPA = 90/10, 450 g of distilled lanolin alcohol Sample AD-01 was worked into a 10% miscella. A column measuring 19 mm in inside diameter and equipped with a jacket was packed with 30 g of granular activated carbon GL30 and the above material miscella was passed at a rate of 15 ml/min. (linear velocity = 5.3 cm/min.). The PAH content, general analysis and composition after the above treatment are shown in Tables 19-1, 19-2, 20 and 21. It is apparent that the concentrations of PAH species other than the six species were also lowered and that there was no change in color, general analysis or composition.

Table 19-1   Results of analysis for PAH

(Unit: ppb)

| Sample | F | BbF | BkF | BaP | IcP | BgP | Total 1 |
|---|---|---|---|---|---|---|---|
| Before treatment | 48.1 | 112.3 | 11.5 | 9.2 | 19.3 | 14.9 | 215.3 |
| After treatment | 6.2 | 1.8 | 0.3 | 0.6 | 0.5 | 0.4 | 9.8 |

Table 19-2   Results of analysis for PAH

(Unit: ppb)

| Sample | Phenan-threne | Pyrene | Chrysene | Total 2 | Grand total |
|---|---|---|---|---|---|
| Before treatment | 10.5 | 287.8 | 288.2 | 586.5 | 801.8 |
| After treatment | 3.9 | 11.1 | 3.1 | 18.1 | 27.9 |

Table 20

| General analysis | | | | | | | |
|---|---|---|---|---|---|---|---|
| Sample | GH | AV | SV | OHV | mp (°C) | POV | W/U % |
| Before treatment | 6 | 0.9 | 2.2 | 155 | 70.7 | 9.5 | >300 |
| After treatment | 6 | 0.7 | 1.7 | 156 | 70.5 | 9.0 | >300 |
| W/U: as defined under Table 15. | | | | | | | |

## Table 21    GLC composition

(Unit: %)

| Component | Before treatment | After treatment |
|---|---|---|
| Cholesterol | 29.5 | 29.9 |
| Cholest-3,5-dien-7-one | 3.0 | 2.9 |
| Desmosterol | 1.2 | 1.3 |
| Lathosterol | 1.5 | 1.6 |
| Dihydrolanosterol | 8.1 | 8.0 |
| Lanosterol | 13.0 | 13.1 |

Example 16

The activated carbon treatment was carried out using, as lanolins, (1) the low-boiling fraction liquid lanolin (LL) and (2) high-boiling lanolin fraction hard lanolin (HL), both of which are obtainable by fractionation of lanolin, (3) acetylated lanolin alcohol (AC100), which is an ester of lanolin alcohol, (4) lanolin alcohol-polyoxyethylene 30 mole adduct (L30), (5) lanolin-polyoxyethylene 20 mole adduct (A20), (6) macadamia nut fatty acid cholesteryl (MAC), which is an ester of cholesterol, (7) lanolin fatty acid cholesteryl (CL), (8) cholesterol (CHO), (9) isocholesterol (IC), which is a dihydrolanosterol-lanosterol mixture extracted from lanolin alcohol, (10) lanolin fatty acid methyl ester (FAM) and (11) lanolin fatty acid (LFA). Thus, 10% of powdered activated carbon (Taiko K) was added to each of these starting materials and the mixture was treated in the solvent shown in Table 22 under stirring at 70°C for 1 hour. The PAH values before and after the treatment are shown in units of ppb in Table 22.

It is apparent from the table that from any of these types of lanolin, PAH can be efficiently removed by the activated carbon treatment according to the invention

Table 22

| Sample code | Before or after treatment | Solvent system | F ppb | BbF ppb | BKF ppb | BaP ppb | IcP ppb | BgP ppb | Total ppb |
|---|---|---|---|---|---|---|---|---|---|
| LL | Before | | 122 | 119 | 12 | 4 | 11 | 6 | 273 |
| | After | MEK | 3 | 2 | 0 | 0 | 0 | 1 | 6 |
| HL | Before | | 29 | 37 | 3 | 1 | 4 | 2 | 76 |
| | After | MEK | 1 | 2 | 0 | 0 | 0 | 1 | 4 |
| AC100 | Before | | 128 | 111 | 11 | 8 | 12 | 7 | 277 |
| | After | IPA | 0 | 0 | 0 | 0 | 0 | 0 | 0 |
| L30 | Before | | 42 | 49 | 3 | 1 | 0 | 19 | 114 |
| | After | IPA | 1 | 1 | 0 | 0 | 0 | 0 | 2 |
| A20 | Before | | 39 | 41 | 3 | 2 | 2 | 2 | 89 |
| | After | IPA | 1 | 1 | 0 | 0 | 0 | 0 | 2 |
| MAC | Before | | 4 | 2 | 0 | 1 | 1 | 1 | 9 |
| | After | H/IPA | 1 | 0 | 0 | 0 | 0 | 0 | 1 |
| CL | Before | | 5 | 2 | 1 | 0 | 0 | 0 | 8 |
| | After | MEK | 0 | 0 | 0 | 0 | 0 | 0 | 0 |
| CHO | Before | | 2 | 1 | 0 | 0 | 0 | 0 | 3 |
| | After | MEK | 0 | 0 | 0 | 0 | 0 | 0 | 0 |
| IC | Before | | 4 | 1 | 0 | 0 | 0 | 0 | 5 |
| | After | MEK | 0 | 0 | 0 | 0 | 0 | 0 | 0 |
| FAM | Before | | 6 | 3 | 1 | 0 | 0 | 0 | 10 |
| | After | MEK | 0 | 0 | 0 | 0 | 0 | 0 | 0 |
| LFA | Before | | 7 | 3 | 1 | 0 | 0 | 0 | 11 |
| | After | MEK | 0 | 0 | 0 | 0 | 0 | 0 | 0 |

In the above table, MEK denotes a solution in aqueous methyl ethyl ketone and H/IPA denotes a solvent mixture of heptane and IPA ( = 90/10, v/v).

Example 17

A lanolin with a PAH concentration of 90 ppb for said 6 species combined (F = 46 ppb, BbF = 30 ppb, BkF = 5 ppb, BaP = 3 ppb, BgP = 2 ppb, IcP = 4 ppb) was subjected to vacuum distillation at 230°C and 0.005 Torr to provide 9% of distillate and 91% of residue.

The total PAH content of this residue was 10 ppb (F = 3 ppb, BbF = 4 ppb, BkF = 0 ppb, BaP = 0 ppb, BgP = 1 ppb, IcP = 2 ppb).

This residue was saponified and extracted to give fatty acid and alcohol fractions. The yield of lanolin fatty acid was 64% and the total PAH residue in this fraction was 4 ppb. As to lanolin alcohol, its yield was 36% and the PAH residue in this alcohol was 20 ppb.

As a control, the same starting material lanolin was saponified and extracted without prior vacuum distillation. As a result, the yields of fatty acid and alcohol were 55% and 45%, respectively. The respective PAH residues were 9 ppb and 178 ppb.

The above results indicated that the vacuum distillation of lanolin under the specified conditions enables a fractionation thereof into a fatty acid fraction substantially free of PAH and a free alcohol fraction containing PAH and that PAH in this alcohol fraction can be eliminated by subsequent saponification and extraction.

Example 18

To 500 g of the same lanolin (hydroxyl value 35) as used in Example 17 was added 10 g of boric acid and the esterification reaction was conducted at 120°C and 5 Torr for 5 hours.

The resulting ester was subjected to vacuum distillation under the same conditions as in Example 17, followed by aqueous washing to remove the boric acid and provide a treated lanolin.

The concentration of PAH in this treated lanolin was 10 ppb. This lanolin could then be fractionated into an alcohol fraction (yield 45%) and a fatty acid fraction by saponification and extraction.

It is, therefore, clear that by subjecting lanolin to esterification with boric acid and vacuum distillation in succession, PAH can be removed with high selectivity and in good yield.

INDUSTRIAL APPLICABILITY

This invention provides a method of quantitating polycyclic aromatic compounds (PAH) in lanolin which comprises subjecting a lanolin containing PAH to styrene-divinylbenzene copolymer gel permeation chromatography for separation and concentration and assaying PAH using an HPLC equipped with a fluorescence detector and a method of removing PAH from lanolin which comprises selecting the optimum conditions, calculating the amount of an activated carbon required for minimizing PAH according to the PHA-removing activity of activated carbon as determined by the above quantitation method, and contacting the lanolin with said necessary amount of carbon for specific adsorption of the PAH on the carbon. The invention further provides a method of removing PAH from WG or lanolin which comprises subjecting the WG or lanolin to vacuum distillation with or without prior esterification with boric acid.

By the PAH removing technology of this invention, six carcinogenic species and other species of PAH can be easily removed with accuracy and good reproducibility. Thus, by using 10% of activated carbon based on the weight of the material, a lanolin containing PAH in a total concentration of 1000 ppb, for instance, can be purified to a PAH level of 2 ppb. Moreover, the composition and physical properties of the lanolin are not affected by the procedure and the yield is also high. The lanolin from which PAH has been removed by this technology can be more safely used for pharmaceutical and cosmetic applications in which lanolin products have been conventionally used.

**Claims**

1. A method of quantitating polycyclic aromatic compounds in lanolin which comprises subjecting said lanolin to styrene-divinylbenzene copolymer gel permeation chromatography for separation and concentration.

2. A method of removing polycyclic aromatic compounds in lanolin which comprises subjecting said lanolin to adsorption treatment with activated carbon.

3. The method according to claim 2 wherein said lanolin is a lanolin derivative other than wool grease and lanolin.

4. The method according to claim 2 wherein said lanolin derivative is lanolin alcohol.

5. The method according to claim 2 wherein the lanolin is wool grease and lanolin and the adsorption treatment is carried out at a temperature not below 30°C.

6. The method according to claim 2 wherein the lanolin is wool grease and lanolin and the adsorption treatment with activated carbon is carried out in the absence of a solvent or in an organic solvent other than hexane.

7. A method of producing a lanolin derivative free of polycyclic aromatic compounds starting with wool grease or lanolin characterized in that the starting material is previously subjected to vacuum distillation at 150-250°C and 0.1-0.001 Torr to thereby remove residues of polycyclic aromatic compounds from the starting material.

8. The method according to claim 7 wherein the lanolin derivative is lanolin alcohol.

9. A method of removing polycyclic aromatic compounds from wool grease or lanolin characterized in that the wool grease or lanolin is treated with boric acid and then subjected to vacuum distillation at a temperature of 150-250°C and a vacuum degree of 0.1-0.001 Torr.

# INTERNATIONAL SEARCH REPORT

International application No.

PCT/JP94/00010

### A. CLASSIFICATION OF SUBJECT MATTER

Int. Cl$^5$  G01N30/88, C11B11/00, 3/10, 3/12

According to International Patent Classification (IPC) or to both national classification and IPC

### B. FIELDS SEARCHED

Minimum documentation searched (classification system followed by classification symbols)

Int. Cl$^5$  G01N30/88, C11B11/00, 3/10, 3/12

Documentation searched other than minimum documentation to the extent that such documents are included in the fields searched

| | |
|---|---|
| Jitsuyo Shinan Koho | 1926 – 1994 |
| Kokai Jitsuyo Shinan Koho | 1971 – 1994 |

Electronic data base consulted during the international search (name of data base and, where practicable, search terms used)

CAS ONLINE

### C. DOCUMENTS CONSIDERED TO BE RELEVANT

| Category* | Citation of document, with indication, where appropriate, of the relevant passages | Relevant to claim No. |
|---|---|---|
| Y | JP, C2, 86520 (Kametaro Takagi, Yasuichi Shimura), May 2, 1930 (02. 05. 30), Claim, (Family: none) | 2-8 |
| A | J. Chromatogr., Vol. 189, No. 2, (1980), Jack. L. Robinson, et. al., "Liquid-solid chromatography on Amberlite XAD-2 and other styrene-drvinylbenzene adsorbents. I. Development of a solvent eluotrpic scale", P. 145-167 | 1 |
| A | J. Chromatogr., Vol. 625, No. 2, (1992), Pilar, Fernandez, et. al. "Use of offline gel permeation chromatography-normal-phase liquid chromatography for the determination of polycyclic aromatic compounds in environmental samples and standard reference materials (air particulate matte and marine sediment)", P. 141-149 | 1 |

☐ Further documents are listed in the continuation of Box C.   ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| April 19, 1994 (19. 04. 94) | May 17, 1994 (17. 05. 94) |

| Name and mailing address of the ISA/ | Authorized officer |
|---|---|
| Japanese Patent Office | |
| Facsimile No. | Telephone No. |

Form PCT/ISA/210 (second sheet) (July 1992)